# EUROPÄISCHE PATENTSCHRIFT

(11) **EP 2 109 201 B1**
(45) Veröffentlichungstag und Bekanntmachung des Hinweises auf die Patenterteilung: **21.06.2017**
(21) Anmeldenummer: 08014333.2
(22) Anmeldetag: 12.08.2008
(51) Int. Cl.: H02G 3/22, H02G 3/06, H02G 15/068

(54) **Vorrichtung zur elektromagnetisch abgedichteten Anordnung eines Kabels**
Device for electromagnetically sealed assembly of a cable
Dispositif destiné à l'agencement électromagnétique étanche d'un câble

(30) Priorität: 10.04.2008 DE 102008018205
(43) Veröffentlichungstag der Anmeldung: 14.10.2009
(73) Patentinhaber: Pflitsch GmbH & Co. KG., 42499 Hückeswagen (DE)
(72) Erfinder: Binder, Karlheinz, 42499 Hückeswagen (DE); Stroh, Stefan, 42477 Radevormwald (DE); Schwinning, Ulrike, 42897 Remscheid (DE)
(74) Vertreter: Köchling, Conrad-Joachim

(56) Entgegenhaltungen:
- EP-A1- 1 673 841
- DE-A1- 2 443 471
- DE-T2- 69 023 931
- DE-U1- 8 434 468
- US-A- 3 830 957
- US-A- 5 278 352
- US-A1- 2004 175 229

## Beschreibung

Die Erfindung betrifft eine Vorrichtung zur elektromagnetisch abgedichteten Anordnung eines elektromagnetische Abschirmmittel enthaltenden oder bildenden stabförmigen Teiles oder eines einen Abschirmmantel enthaltenden Kabels, wobei die Vorrichtung ein Teil mit einer Durchführöffnung für das stabförmige Teil oder das Kabel aufweist, das elektrisch leitfähig ist oder zumindest eine im Bereich der Durchführöffnung elektrisch leitfähige Innenfläche aufweist, die Vorrichtung mindestens ein in radialer Richtung bezüglich der Mittelachse des stabförmigen Teiles oder des Kabels elastisch verformbares Kontaktierungsmittel aufweist, das die Abschirmmittel mit dem Teil mit der Durchführöffnung elektrisch kontaktiert und wobei das Kontaktierungsmittel aus einem gewendelten Federelement besteht.

Vorrichtungen dieser Art sind beispielsweise aus der US-A-4 547 623, der US-A-5 237 129, der US 6,354,851 B1, der DE 1 646 612 U1, der DE 690 23 931 T2, der EP 1 673 841 B1 sowie der DE 694 03 174 T2 bekannt. Während bei der DE 1 646 612 U1 eine EMV-dichte Anordnung bei einem stabförmigen Teil, nämlich einem zylindrischen Kolben offenbart wird, offenbaren die anderen zum Stand der Technik angegebenen Druckschriften elektromagnetische Abdichtungen von elektrischen Kabeln, die mit einem Abschirmmantel versehen sind. Lediglich die DE 694 03 174 T2 weist wiederum ein stabförmiges Teil auf, welches elektromagnetisch abgeschirmt werden soll.

Bei den relevanten Lösungen gemäß Stand der Technik ist als wesentliches Kontaktelement für die elektromagnetische Abschirmung ein gewendeltes Federelement in Form einer Schraubenfeder vorgesehen. Solche Schraubenfedern sind zwar für den bestimmungsgemäßen Einsatz brauchbar. Es besteht aber ein Nachteil darin, dass die Anordnung einer solchen Schraubenfeder nur bei bestimmten Abmessungen möglich ist, wenn nämlich das die elektromagnetische Abschirmmittel enthaltende oder bildende stabförmige Teil oder das Kabel mit dem Schirmmantel einen Durchmesser aufweist, der dem Teil relativ eng angepasst ist, welches die Durchführöffnung für das entsprechende stabförmige Teil oder das Kabel aufweist. Beispielsweise aus der DE 694 03 174 T2 ersichtlich (vergleiche beispielsweise Figur 5A bis 5C dieser Druckschrift), ragt das in Form einer ovalen Schraubenfeder ausgebildete Federelement nur geringfügig über den Mantel der Durchführöffnung und/oder über den Mantel des stabförmigen Teiles beziehungsweise des Kabels vor, so dass für unterschiedliche Kabelabmessungen unterschiedliche Teile mit Durchführöffnungen verwendet werden müssen. Hierdurch ist die Herstellungsvielfalt und die Bevorratungsvielfalt solcher Teile erheblich.

Das gleiche Problem ergibt sich bei der Ausführungsform, die in der EP 1 673 841 B1 beschrieben ist, wozu beispielsweise auf die dortige Figur 8 verwiesen wird. Ebenso trifft dies für die DE 690 23 931 T2 zu, wozu beispielsweise auf die dortige Figur 14 verwiesen wird. Das gleiche Problem ergibt sich ebenfalls bei der US 6,354,851 B1, wie ein Blick auf die Figur 6 zeigt.

Bei dem im Stand der Technik bekannten Lösungen muss jeweils für unterschiedliche Abmessungen von durchzuführenden Kabeln oder Stäben eine unterschiedliche Ausführungsform hinsichtlich des Teiles vorgesehen sein, welches die Durchführöffnung für das stabförmige Teil oder das Kabel aufweist. Sofern beispielsweise Kabel oder Stäbe von einem Durchmesser von 5 mm bis zu einem Durchmesser von 20 mm EMV-dicht durch solche Vorrichtungen geführt werden sollen, sind viele Abmessungen entsprechender Teile mit Durchführöffnungen zu fertigen und mit den entsprechenden Schraubenfedern zu komplettieren.

Ausgehend von diesem Stand der Technik liegt der Erfindung die Aufgabe zugrunde, eine Vorrichtung gattungsgemäßer Art zu schaffen, die dazu geeignet und bestimmt ist, mit ein- und derselben Abmessung eines Teiles mit einer Durchführöffnung und mit ein- und derselben Abmessung eines als Kontaktierungsmittel dienenden gewendelten Federelement es zu ermöglichen, Kabel oder Stäbe unterschiedlicher Abmessungen EMV-dicht durchzuführen und zu kontaktieren.

Zur Lösung dieser Aufgabe schlägt die Erfindung vor, dass die Windungen des Federelementes einen im Wesentlichen geraden Halteabschnitt aufweisen, der in Montagesolllage parallel zum Mantel der Durchführöffnung ausgerichtet ist, sowie einen Federabschnitt, der einen federnden Stützbereich bildet, und dass
entweder sich der Halteabschnitt am Mantel der Durchführöffnung abstützt und der federnde Stützbereich den Mantel des stabförmigen Teiles oder den Abschirmmantel des Kabels kontaktiert, oder sich der Halteabschnitt am Mantel des Kabels oder des stabförmigen Teiles abstützt und der federnde Stützbereich den Mantel der Durchführöffnung kontaktiert.

Die im Wesentlichen geraden Halteabschnitte des Federelementes bilden eine Montage- und Kontaktfläche gegenüber dem Mantel der Durchführöffnung. Die von diesen als gerade Halteabschnitte abragenden Federabschnitte, die die Stützbereiche für den Mantel des stabförmigen Teiles beziehungsweise den Abschirmmantel des Kabels bilden und diese kontaktieren, können unabhängig von der Ausbildung des geraden Halteabschnittes auf den Durchmesser beziehungsweise den Radius der Durchführöffnung des entsprechenden Teiles abgestimmt werden, so dass sie sehr weit in die von dem Mantel umgebende Durchführöffnung hineinragen. Diese Ausbildung ermöglicht es, beispielsweise die Abmessung des Teiles mit der Durchführöffnung auf einen maximalen Durchmesser eines Kabels oder stabförmigen Teiles abzustimmen, welches noch mit Spiel durch diese Durchführöffnung geführt werden kann und durch diese Öffnung passt. Das Federelement stützt sich bei unterschiedlichsten Kabelabmessungen, die von einer größten Kabelabmessung oder Stababmessung, die gerade noch durch die Durchführöffnung passt, bis zu einer kleinsten Abmessung, die gering größer ist als der Kanal, der von den freien vorragenden Federabschnitten, die an den Halteabschnitt jeweils anschließen, umgrenzt ist, jeweils bestimmungsgemäß sowohl an der Innenfläche der Durchführöffnung als auch am Mantel des stabförmigen Elementes oder am Abschirmmantel des entsprechend von Isolierung befreiten Kabels ab. Die Länge des gegenüber dem Halteabschnitt radial nach innen vorragenden Federabschnittes ist im Prinzip beliebig und nur durch den Radius der Durchführöffnung begrenzt, so dass unterschiedlichste Kabelabmessungen oder Stababmessungen mit ein- und derselben Vorrichtung EMV-dicht durchgeführt und kontaktiert werden können. Dabei ist es nicht erforderlich, die Wandung oder eine entsprechende Ausnehmung in der Wandung der Durchführöffnung in Abhängigkeit von der Auskraglänge der Federabschnitte zu variieren, weil der im Wesentlichen gerade Halteabschnitt ohne weiteres in der Durchführöffnung oder einer entsprechenden Ausnehmung der Durchführöffnung angebracht werden kann.

Es kann somit bei einer relativ schlanken Ausbildung des Teiles, welches die Durchführöffnung aufweist, ein Federelement eingesetzt werden, welches eine große Stützlänge in dem eigentlichen Federabschnitt aufweist.

Unter Umständen kann vorgesehen sein, dass der Stützbereich durch sich halbkreisförmig an die geraden Halteabschnitte anschließende Windungen des Federelementes gebildet ist.

Hierdurch ergibt sich ein Federelement, welches einen zylindrischen Außenmantel, gebildet durch die im Wesentlichen geraden Halteabschnitte aufweist, sowie einen durch die halbkreisförmig gebogenen Federabschnitt geformten Stützbereich. Nachteilig hierbei ist, dass die vorkragenden Stützbereiche lediglich einen Radius aufweisen können, der der halben Länge des Halteabschnittes entspricht.

Um den Stützbereich größer ausbilden zu können, also noch eine größere Vielzahl von stabförmigen Elementen oder Kabeln mit ein- und derselben Abmessung fassen zu können, ist vorgesehen, dass der Stützbereich durch sich winklig an die geraden Halteabschnitte anschließende, im Wesentlichen gerade Windungsabschnitte gebildet ist, wobei das Federelement im Querschnitt dreieckige Form aufweist.

Bei einer solchen Ausbildung ist die Länge des geraden Halteabschnittes nicht mehr bestimmend für die Auskraglänge der die Stützbereiche bildenden Federabschnitte, sondern die Schenkellänge der Stützbereiche ist völlig unabhängig von der Länge des Halteabschnittes, so dass also die Auskraglänge der Federelemente größer sein kann als die halbe Länge des Halteabschnittes. Somit ist bei relativ kurzer Länge des Halteabschnittes eine große Auskraglänge der die Stützbereiche bildenden Federabschnitte ermöglicht.

Um die Montage zu erleichtern und auch die Knickgefahr in den Übergangsbereichen der Windungen in die Halteabschnitte zu mindern, ist vorgesehen, dass die Übergänge der Windungen in den geraden Halteabschnitt gerundet sind.

Aus dem gleichen Grunde ist bevorzugt vorgesehen, dass die Übergänge der im Winkel zueinander gerichteten Windungsabschnitte gerundet sind.

Dies ist insbesondere dann auch vom Vorteil, wenn die Vorrichtung zur Durchführung von einen Schirmmantel aufweisenden Kabeln benutzt wird, da durch die gerundeten Übergänge die Gefahr gemindert ist, dass sich die Stützbereiche des Federelementes an der Schirmung des durchgeführten Kabels verhaken oder diese verletzen.

Bevorzugt kann zudem vorgesehen sein, dass die Spitze der Dreiecksform des Federelementes abgeflacht ist, so dass sich im Querschnitt eine etwa trapezförmige Form des Federelementes ergibt.

Dabei kann vorgesehen sein, dass der die Abflachung bildende Wandungsbereich des Federelementes konkav eingewölbt ist, insbesondere analog einer runden Querschnittsform des stabförmigen Teils oder des Kabels.

Auch kann vorgesehen sein, dass der gerade Halteabschnitt konisch in einen Winkel zwischen 0° und 70° zum durchgeführten stabförmigen Teil oder zum Kabel gerichtet ist.

Bevorzugt ist dabei vorgesehen, dass der gerade Halteabschnitt parallel zum durchgeführten stabförmigen Teil oder zum Kabel gerichtet ist.

Auch ist bevorzugt vorgesehen, dass das Federelement im Querschnitt ein gleichschenkliges Dreieck bildet.

Anstelle einer solchen Ausbildung wäre auch eine ungleichschenklige Dreiecksausbildung des Querschnittes möglich, jedoch wird die gleichschenklige Ausbildung bevorzugt.

Um einen möglichst großen Durchmesserbereich von Stäben oder Kabeln mit ein- und derselben Vorrichtung erfassen zu können, ist bevorzugt vorgesehen, dass die Federabschnitte des Federelementes sich bis nahe der Mittelachse des ringförmigen Federelementes erstrecken.

In an sich bekannter Weise ist vorgesehen, dass die Windungen des Federelementes zu einem endlosen ringförmigen Federelement verbunden sind.

Eine bevorzugte Weiterbildung wird darin gesehen, dass der Halteabschnitt des Federelementes am Mantel der Durchführöffnung befestigt ist.

Gemäß dieser Ausbildung kann das Federelement an dem Teil, welches die Durchführöffnung aufweist, befestigt werden, so dass eine funktionsfähige Einheit vom Hersteller zum Anwender geliefert werden kann. In diese Vorrichtung kann dann ein entsprechendes Kabel oder ein entsprechender Stab eingesetzt werden, um die EMV-Dichtung zu erreichen. Selbstverständlich wäre es auch möglich, wie dies im Stand der Technik an sich bekannt ist, das Federelement auf den Mantel des Stabes oder des Kabels aufzubringen und unter Federvorspannung zu halten, so dass dann der Stab oder das Kabel in das Element eingeschoben werden kann, welches die Durchführöffnung aufweist. Durch geeignete Mittel könnte dabei das Federelement in der Sollposition innerhalb der Durchführöffnung des entsprechenden Teiles arretiert werden.

Solche Ausbildungen sind im Stand der Technik an sich bekannt.

Eine mögliche Weiterbildung hierzu wird darin gesehen, dass der Halteabschnitt des Federelementes am Mantel der Durchführöffnung stoffschlüssig befestigt ist, zum Beispiel, verklebt, verschweißt, verlötet ist.

Eine bevorzugte Weiterbildung wird darin gesehen, dass der Halteabschnitt am Mantel der Durchführöffnung alternativ oder zusätzlich formschlüssig gehalten ist.

Diese Ausbildung kann alternativ oder zusätzlich zu dem vorgenannten stoffschlüssigen Verbinden vorgesehen sein.

Zur formschlüssigen Verbindung kann vorgesehen sein, dass der Mantel der Durchführöffnung umlaufende Rippen oder eine umlaufende Nut aufweist, wobei die Halteabschnitte des Federelementes zwischen den Rippen oder den Flanken der Nut axial unverlierbar gehalten ist.

Auch kann vorgesehen sein, dass die Federabschnitte des Federelementes radial zum durch die Durchführöffnung gebildeten Durchführkanal gerichtet sind.

Bei solchen radial gerichteten Federabschnitten wird beim Zuführen des entsprechenden Kabels oder Stabes eine geringe Drehbewegung auf das Kabel oder den Stab durchgeführt, so dass sich die radial ausgerichteten Federabschnitte nach Art einer Irisblende schräg stellen, um den entsprechenden Freiraum für den Stab oder das Kabel zu bilden.

Auch kann bevorzugt vorgesehen sein, dass die Federabschnitte des Federelementes gegenüber der radialen Richtung bezogen auf die Durchführöffnung in einem Winkel gleichsinnig geneigt sind.

Hierbei ist eine Bewegung der Federabschnitte beim Einführen eines Stabes oder Kabels vorgegeben, so dass sich die Federabschnitte nur in der Richtung bewegen, die durch den vorgegebenen Neigungswinkel bestimmt ist.

In an sich bekannter Weise ist zudem vorgesehen, dass das Federelement aus Runddraht geformt ist.

Zudem kann vorgesehen sein, dass das Federelement aus rostfreiem Edelstahl-Runddraht geformt ist.

Bevorzugt ist vorgesehen, dass das Teil mit der Durchführöffnung ein Gewindenippel einer Kabelverschraubung ist, der das Federelement aufnimmt und an einem Ende eine gelochte Verschraubungskappe sowie einen gelochten Dicht- und/oder Klemmeinsatz aufweist.

Eine solche Kombination ist beispielsweise aus der US 6,354,851 B1, der US 5,237,129, der US 4,547,623 bekannt.

Besonders bevorzugt ist zudem vorgesehen, dass die Federabschnitte, die den Stützbereich bilden, in radialer Richtung des ringförmigen Federelementes gesehen, eine Länge aufweisen, die etwa dem Radius der Durchführöffnung entspricht.

Bei radialer Ausrichtung der Federabschnitte, die den Stützbereich bilden, ist die maximale Länge durch den Radius der Durchführöffnung bestimmt, abzüglich der durch die Querschnittsabmessung des Federdrahtes gebildeten Abmessung. Sofern die Federabschnitte nicht radial gerichtet sind, sondern gegenüber der radialen Richtung geneigt sind, ist eine längere Ausbildung der Federabschnitte möglich, da die Federabschnitte sich nach Art einer Irisblende überdecken können.

Der Kontaktdruck, der mittels des Federelementes erreichbar ist, kann durch die Materialauswahl des Federdrahtes sowie durch die Drahtstärke des Ausgangsmaterials beeinflusst werden.

Ein Ausführungsbeispiel der Erfindung ist in der Zeichnung dargestellt und im Folgenden näher beschrieben. Es zeigt:
- Figur 1: eine erfindungsgemäße Vorrichtung in Explosionsdarstellung;
- Figur 2: eine Einzelheit in Draufsicht gesehen;
- Figur 3: die Vorrichtung in einer Montageposition im Mittellängsschnitt III/III der Figur 4 gesehen;
- Figur 4: die Vorrichtung in Stirnansicht.

In der Zeichnung ist eine Vorrichtung zur elektromagnetischen abgedichteten Anordnung eines elektromagnetische Abschirmmittel enthaltenden oder bildenden stabförmigen Teiles oder eines einen Abschirmmantel enthaltenden Kabels gezeigt. Die Vorrichtung weist ein Teil 1 mit einer Durchführöffnung 2 für das stabförmige Teil oder das Kabel auf, welches elektrisch leitfähig ist oder zu mindest eine im Bereich der Durchführöffnung 2 elektrisch leitfähige Innenfläche aufweist. Praktischerweise kann ein solches Teil beispielsweise aus Metall bestehen oder auch aus dotiertem, durch Dotierung elektrisch leitfähig gemachtem Kunststoff. Ferner weist die Vorrichtung mindestens ein in radialer Richtung bezüglich der Mittelachse des stabförmigen Teiles oder des Kabels elastisch verformbares Kontaktierungsmittel 3 auf, welches in Montagesollzustand die Abschirmmittel mit dem Teil 1 der Durchführöffnung 2 elektrisch kontaktiert, wobei das Kontaktierungsmittel 3 aus einem gewendelten Federelement besteht, welches elektrisch leitfähig ist, also beispielsweise aus Metalldraht geformt ist.

Zur Erfindung gehört nicht nur die Anordnung eines einzigen Federelementes, sondern es ist auch möglich, mehrere Federelemente axial hintereinander anzuordnen oder mehrere Federelemente ineinander anzuordnen, wie dies beispielsweise aus der DE 690 23 931 T2 bekannt ist.

Um zu erreichen, dass eine entsprechende Vorrichtung bei identischen Bauteilen 1,2,3 für Stäbe oder Kabel erheblich unterschiedlicher Durchmesser brauchbar ist, ist vorgesehen, dass die Windungen des Federelementes 3 einen im Wesentlichen geraden Halteabschnitt 4 aufweisen, der in Montagesolllage parallel zum Mantel der Durchführöffnung 2 ausgerichtet ist und sich vorzugsweise an diesem abstützt.

Alternativ kann auch vorgesehen sein, dass sich der gerade Halteabschnitt 4 am Mantel des durchzuführenden Kabels oder des stabförmigen Teiles abstützt.

Allerdings ist diese Lösung nicht bevorzugt. Ferner bestehen die Windungen des Federelementes 3 aus einem Federabschnitt, der einen federnden Stützbereich 5 bildet, um entweder den Mantel des stabförmigen Teiles oder den Abschirmmantel des Kabels zu kontaktieren oder aber bei der alternativen Lösungsmöglichkeit den Mantel der Durchführöffnung 2 zu kontaktieren.

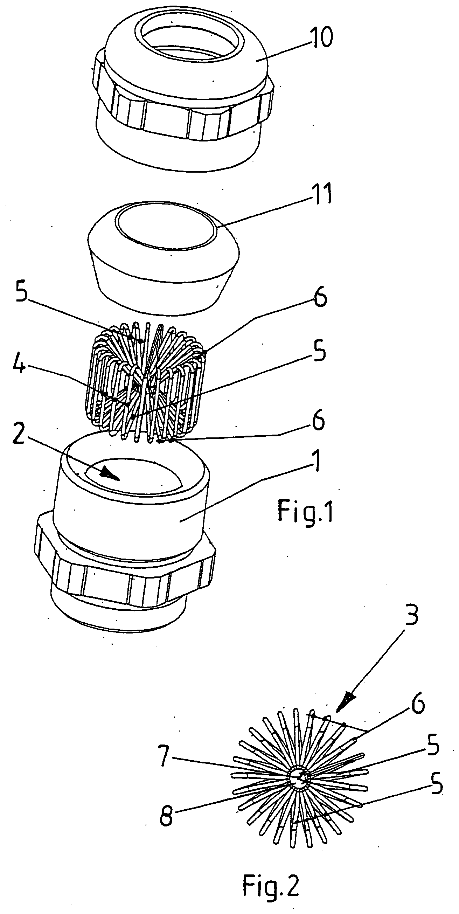

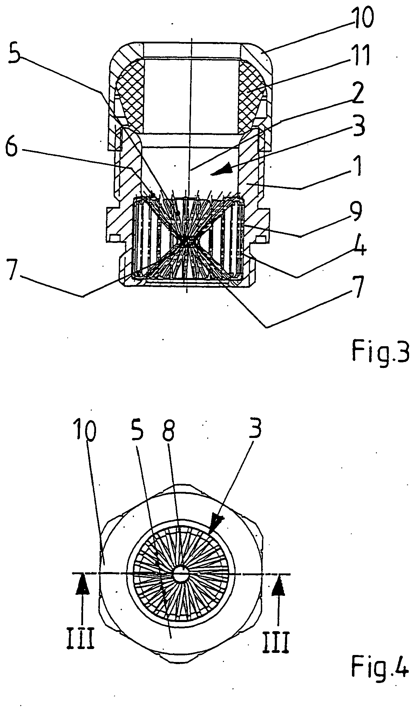

Im Ausführungsbeispiel ist der Stützbereich 5 durch sich winklig an die geraden Halteabschnitte 4 anschließende, im Wesentlichen gerade Windungsabschnitte gebildet, wobei das Federelement 3 im Querschnitt eine etwa dreieckige Form aufweist, wie insbesondere aus der Darstellung in Figur 1 und Figur 3 ersichtlich ist. Die Übergänge 6 der Windungen in den geraden Halterabschnitt 4 sind gerundet. Ebenso sind die Übergänge 7 der im Winkel zueinander gerichteten Windungsabschnitte gerundet. Im Ausführungsbeispiel ist der gerade Halteabschnitt 4 parallel zum durchgeführten stabförmigen Teil oder zum durchgeführten Kabel gerichtet und parallel zum Mantel der Durchführöffnung 2 des Teiles 1.

Wie aus den Abbildungen ersichtlich, bildet das Federelement 3 im Querschnitt ein gleichschenkliges Dreieck. Die den Stützbereich 5 bildenden Federabschnitte des Federelementes 3 erstrecken sich bis nahe der Mittelachse 8 des ringförmigen Federelementes 3, wobei die Windungen des Federelementes 3 zu einem endlosen, ringförmigen Federelement verbunden sind.

Vorzugsweise ist der Halteabschnitt 4 des Federelementes 3 am Mantel der Durchführöffnung 2 befestigt. Dazu ist im Ausführungsbeispiel der Halteabschnitt 4 am Mantel formschlüssig gehalten. Der Mantel der Durchführöffnung 2 weist hierzu eine umlaufende Nut 9 auf, wobei die Halteabschnitte 4 zwischen den Flanken Nut 9 axial unverschieblich gehalten sind.

Die Federabschnitte 5 des Federelementes 3 sind gegenüber der radialen Ausrichtung bezogen auf die Durchführöffnung 2 in einem Winkel gleichsinnig geneigt, wie aus der Draufsicht gemäß Figur 2 und Figur 4 ersichtlich ist. Hierdurch wird eine bevorzugte Bewegung der Federabschnitte 5 bestimmt, die dazu führt, dass beim Einführen eines Kabels oder Stabes die Federabschnitte sich gleichgerichtet verstärkt neigen, je nach Durchmesser des durchgeführten Teiles, und zwar in gleicher Richtung, die durch den vorgegebenen Neigungswinkel bestimmt ist.

Das Federelement 3 besteht aus rostfreiem Edelstahlrunddraht.

Wie in den Figuren veranschaulicht, ist das Teil 1 mit der Durchführöffnung 2 ein Gewindenippel einer Kabelverschraubung, der das Federelement 3 aufnimmt und an einem Ende eine gelochte Verschraubungskappe 10 sowie einen gelochten Dicht- oder Klemmeinsatz 11 aufweist. Diese zusätzliche Anordnung dient dazu, ein durchgeführtes Kabel oder dergleichen abzudichten und Zug zu entlasten, indem die Verschraubungskappe auf das Teil 1 aufgeschraubt und angezogen wird, wobei der Dichtbeziehungsweise Klemmeinsatz 11 die Abdichtung und Zugentlastung gegenüber dem Kabelmantel oder dergleichen bildet.

Wie insbesondere aus Figur 2 und Figur 4 ersichtlich, weisen die Federabschnitte 5, die den Stützbereich 5 bilden, in radialer Richtung des ringförmigen Federelementes 3 gesehen, eine Länge auf, die etwa dem Radius der Durchführöffnung 2 entspricht. Wie anhand der Darstellung in Figur 3 ersichtlich, ist es möglich, einen Stab oder ein Kabel in diese Vorrichtung einzuführen und EMV-dicht mittels des Federelementes 3 anzuordnen, welches einen Durchmesser aufweist, der dem Mittelbereich des Federelementes 3 in der Ansicht gemäß Figur 4 entspricht, wobei auch Kabel oder Stäbe einführbar sind, die im Durchmesser nur gering kleiner sind als dem Durchmesser der Durchführöffnung 2 entspricht.

Es ist somit bei einer einzigen Abmessungsgröße der Vorrichtung eine Vielzahl von Kabeln oder Stäben unterschiedlicher Durchmesser einzusetzen.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur elektromagnetisch abgedichteten Anordnung eines elektromagnetische Abschirmmittel enthaltenden oder bildenden stabförmigen Teiles oder eines einen Abschirmmantel enthaltenden Kabels, wobei die Vorrichtung ein Teil (1) mit einer Durchführöffnung (2) für das stabförmige Teil oder das Kabel aufweist, das elektrisch leitfähig ist oder zumindest eine im Bereich der Durchführöffnung (2) elektrisch leitfähige Innenfläche aufweist, die Vorrichtung mindestens ein in radialer Richtung bezüglich der Mittelachse des stabförmigen Teiles oder des Kabels elastisch verformbares Kontaktierungsmittel aufweist, das die Abschirmmittel mit dem Teil (1) mit der Durchführöffnung (2) elektrisch kontaktiert und wobei das Kontaktierungsmittel aus einem gewendelten Federelement (3) besteht,
**dadurch gekennzeichnet, dass** die Windungen des Federelementes (3) einen im Wesentlichen geraden Halteabschnitt (4) aufweisen, der in Montagesolllage parallel zum Mantel der Durchführöffnung (2) ausgerichtet ist, sowie einen Federabschnitt, der einen federnden Stützbereich (5) bildet, und dass entweder sich der Halteabschnitt (4) am Mantel der Durchführöffnung (2) abstützt und der federnde Stützbereich (5) den Mantel des stabförmigen Teiles oder den Abschirmmantel des Kabels kontaktiert,
oder sich der Halteabschnitt (4) am Mantel des Kabels oder des stabförmigen Teiles abstützt und der federnde Stützbereich (5) den Mantel der Durchführöffnung (2) kontaktiert.

2. Vorrichtung nach Anspruch 1,
**dadurch gekennzeichnet, dass** der Stützbereich (5) durch sich halbkreisförmig an die geraden Halteabschnitte (4) anschließende Windungen des Federelementes (3) gebildet ist.

3. Vorrichtung nach Anspruch 1,
**dadurch gekennzeichnet, dass** der Stützbereich (5) durch sich winklig an die geraden Halteabschnitte (4) anschließende, im Wesentlichen gerade Windungsabschnitte gebildet ist, wobei das Federelement (3) im Querschnitt dreieckige Form aufweist.

4. Vorrichtung nach einem der Ansprüche 1 bis 3,
**dadurch gekennzeichnet, dass** die Übergänge (6) der Windungen in den geraden Halteabschnitt (4) gerundet sind.

5. Vorrichtung nach Anspruch 3,
**dadurch gekennzeichnet, dass** die Übergänge (7) der im Winkel zu einander gerichteten Windungsabschnitte gerundet sind.

6. Vorrichtung nach einem der Ansprüche 3 oder 5,
**dadurch gekennzeichnet, dass** die Spitze der Dreiecksform des Federelementes (3) abgeflacht ist, so dass sich im Querschnitt eine etwa trapezförmige Form des Federelementes (3) ergibt.

7. Vorrichtung nach Anspruch 6,
**dadurch gekennzeichnet, dass** der die Abflachung bildende Wandungsbereich des Federelementes (3) konkav eingewölbt ist, insbesondere analog einer runden Querschnittsform des stabförmigen Teils oder des Kabels.

8. Vorrichtung nach einem der Ansprüche 1 bis 7,
**dadurch gekennzeichnet, dass** der gerade Halteabschnitt (4) konisch in einen Winkel zwischen 0 ° und 70 ° zum durchgeführten stabförmigen Teil oder zum Kabel gerichtet ist.

9. Vorrichtung nach einem der Ansprüche 1 bis 7,
**dadurch gekennzeichnet, dass** der gerade Halteabschnitt (4) parallel zum durchgeführten stabförmigen Teil oder zum Kabel gerichtet ist.

10. Vorrichtung nach einem der Ansprüche 3 bis 9,
**dadurch gekennzeichnet, dass** das Federelement (3) im Querschnitt ein gleichschenkliges Dreieck bildet.

11. Vorrichtung nach einem der Ansprüche 1 bis 10,
**dadurch gekennzeichnet, dass** die Federabschnitte des Federelementes (3) sich bis nahe der Mittelachse (8) des ringförmigen Federelementes (3) erstrecken.

12. Vorrichtung nach einem der Ansprüche 1 bis 11,
**dadurch gekennzeichnet, dass** die Windungen des Federelementes (3) zu einem endlosen ringförmigen Federelement (3) verbunden sind.

13. Vorrichtung nach einem der Ansprüche 1 bis 12,
**dadurch gekennzeichnet, dass** der Halteabschnitt (4) des Federelementes (3) am Mantel der Durchführöffnung (2) befestigt ist.

14. Vorrichtung nach Anspruch 13,
**dadurch gekennzeichnet, dass** der Halteabschnitt (4) des Federelementes (3) am Mantel der Durchführöffnung (2) stoffschlüssig befestigt ist, zum Beispiel verklebt, verschweißt, verlötet ist.

15. Vorrichtung nach Anspruch 13 oder 14,
**dadurch gekennzeichnet, dass** der Halteabschnitt (4) am Mantel der Durchführöffnung (2) alternativ oder zusätzlich formschlüssig gehalten ist.

16. Vorrichtung nach Anspruch 15,
**dadurch gekennzeichnet, dass** der Mantel der Durchführöffnung (2) umlaufende Rippen oder eine umlaufende Nut (9) aufweist, wobei die Halteabschnitte (4) des Federelementes (3) zwischen den Rippen oder den Flanken der Nut (9) axial unverlierbar gehalten ist.

17. Vorrichtung nach einem der Ansprüche 1 bis 16,
**dadurch gekennzeichnet, dass** die Federabschnitte (5) des Federelementes (3) radial zum durch die Durchführöffnung (2) gebildeten Durchführkanal gerichtet sind.

18. Vorrichtung nach einem der Ansprüche 1 bis 16,
**dadurch gekennzeichnet, dass** die Federabschnitte (5) des Federelementes (3) gegenüber der radialen Richtung bezogen auf die Durchführöffnung (2) in einem Winkel gleichsinnig geneigt sind.

19. Vorrichtung nach einem der Ansprüche 1 bis 18,
**dadurch gekennzeichnet, dass** das Federelement (3) aus Runddraht geformt ist.

20. Vorrichtung nach Anspruch 19,
**dadurch gekennzeichnet, dass** das Federelement (3) aus rostfreiem Edelstahl-Runddraht geformt ist.

21. Vorrichtung nach einem der Ansprüche 1 bis 20,
**dadurch gekennzeichnet, dass** das Teil (1) mit der Durchführöffnung (2) ein Gewindenippel einer Kabelverschraubung ist, der das Federelement (3) aufnimmt und an einem Ende eine gelochte Verschraubungskappe (10) sowie einen gelochten Dicht- und/oder Klemmeinsatz (11) aufweist.

22. Vorrichtung nach einem der Ansprüche 1 bis 21,
**dadurch gekennzeichnet, dass** die Federabschnitte, die den Stützbereich (5) bilden, in radialer Richtung des ringförmigen Federelementes (3) gesehen, eine Länge aufweisen, die etwa dem Radius der Durchführöffnung (2) entspricht.

## Claims

1. A device for electromagnetically sealed assembly of a cable of a rod-like portion containing or forming electromagnetic shielding means or a cable containing a shielding sleeve, the device including a portion (1) with a feed-through opening (2) for the rod-like portion or the cable that is electrically conductive or includes at least one inner face being electrically conductive in the region of the feed-through opening (2), the device including at least one contacting means being elastically deformable in a radial direction with respect to the central axis of the rod-like portion or of the cable that electrically contacts the shielding means with the portion (1) with the feed-through opening (2), and the contacting means consisting of a helical spring element (3),
**characterized by** that the turns of the spring element (3) include a substantially straight holding portion (4) that extends, in the intended mounting position, in parallel to the sleeve of the feed-through opening (2), and a spring portion forming an elastic support region (5), and that
either the holding portion (4) is supported at the sleeve of the feed-through opening (2) and the elastic support region (5) contacts the sleeve of the rod-like portion or the shielding sleeve of the cable,
or the holding portion (4) is supported at the sleeve of the cable or of the rod-like portion and the elastic support region (5) contacts the sleeve of the feed-through opening (2).

2. The device according to claim 1,
**characterized by** that the support region (5) is formed by semi-circular turns of the spring element (3) following the straight holding portions (4).

3. The device according to claim 1,
**characterized by** that the support region (5) is formed by substantially straight angled turn portions following the straight holding portions (4), the spring element (3) having a triangular cross-section.

4. The device according to one of claims 1 to 3,
**characterized by** that the transitions (6) of the turns into the straight holding portion (4) are rounded.

5. The device according to claim 3,
**characterized by** that the transitions (7) of the mutually angled turn portions are rounded.

6. The device according to one of claims 3 or 5,
**characterized by** that the tip of the triangular shape of the spring element (3) is flattened, so that an approximately trapezoidal cross-section of the spring element (3) is obtained.

7. The device according to claim 6,
**characterized by** that the wall region of the spring element (3) forming the flattened portion has concave inward curvature, in particular in an analogous manner to a round cross-sectional shape of the rod-like portion or of the cable.

8. The device according to one of claims 1 to 7,
**characterized by** that the straight holding portion (4) extends conically at an angle between 0 and 70° relative to the fed-through rod-like portion or to the cable.

9. The device according to one of claims 1 to 7,
**characterized by** that the straight holding portion (4) extends in parallel to the fed-through rod-like portion or to the cable.

10. The device according to one of claims 3 to 9,
**characterized by** that the spring element (3) has a cross-section of an isosceles triangle.

11. The device according to one of claims 1 to 10,
**characterized by** that the spring portions of the spring element (3) extend close to the central axis (8) of the annular spring element (3).

12. The device according to one of claims 1 to 11,
**characterized by** that the turns of the spring element (3) are connected so to form an endless annular spring element (3).

13. The device according to one of claims 1 to 12,
**characterized by** that the holding portion (4) of the spring element (3) is attached at the sleeve of the feed-through opening (2).

14. The device according to claim 13,
**characterized by** that the holding portion (4) of the spring element (3) is integrally attached at the sleeve of the feed-through opening (2), for instance is glued, welded, or soldered.

15. The device according to claim 13 or 14,
**characterized by** that the holding portion (4) is held at the sleeve of the feed-through opening (2) in an alternative or in addition form-fitted manner.

16. The device according to claim 15,
**characterized by** that the sleeve of the feed-through opening (2) includes circumferential ribs or a circumferential groove (9), the holding portions (4) of the spring element (3) being axially captively held between the ribs or the flanks of the groove (9).

17. The device according to one of claims 1 to 16,
**characterized by** that the spring portions (5) of the spring element (3) extend radially toward the feed-through channel formed by the feed-through opening (2).

18. The device according to one of claims 1 to 16,
**characterized by** that the spring portions (5) of the spring element (3) are inclined in an identical manner at an angle relative to the radial direction with respect to the feed-through opening (2).

19. The device according to one of claims 1 to 18,
**characterized by** that the spring element (3) is formed of a round wire.

20. The device according to claim 19,
**characterized by** that the spring element (3) is formed of a round wire of stainless steel.

21. The device according to one of claims 1 to 20,
**characterized by** that the portion (1) with the feed-through opening (2) is a threaded nipple a cable gland receiving the spring element (3) and including at one end a dome nut (10) and a sealing and/or clamping ring (11).

22. The device according to one of claims 1 to 21,
**characterized by** that the spring portions forming the support region (5) have, as viewed in a radial direction of the annular spring element (3), a length that approximately corresponds to the radius of the feed-through opening (2).

## Revendications

1. Dispositif destiné à l'agencement électromagnétique étanche d'une partie en forme de tige comportant ou formant des moyens de blindage électromagnétique ou d'un câble comportant une gaine de blindage, le dispositif comportant une partie (1) avec une ouverture de passage (2) pour la partie en forme de tige ou le câble qui est électriquement conductrice ou comporte au moins une face intérieure étant électriquement conductrice au niveau de l'ouverture de passage (2), le dispositif comportant au moins un moyen de mise en contact étant élastiquement déformable selon une direction radiale par rapport à l'axe central de la partie en forme de tige ou du câble et contactant électriquement les moyens de blindage avec la partie (1) avec l'ouverture de passage (2), et le moyen de mise en contact consistant en d'un élément de ressort (3) hélicoïdal,
**caractérisé en ce que** les spires de l'élément de ressort (3) comportent une portion de retenue (4) essentiellement rectiligne qui s'étend, dans la position de montage de consigne, en parallèle à la gaine de l'ouverture de passage (2), et une portion de ressort formant une région de maintien (5) élastique, et que
ou bien la portion de retenue (4) s'appuie sur la gaine de l'ouverture de passage (2) et la région de maintien (5) élastique contacte la gaine de la partie en forme de tige ou la gaine de blindage du câble,
ou la portion de retenue (4) s'appuie sur la gaine du câble ou de la partie en forme de tige et la région de maintien (5) élastique contacte la gaine de l'ouverture de passage (2).

2. Dispositif selon la revendication 1,
**caractérisé en ce que** la région de maintien (5) est constituée de spires semi-circulaires de l'élément de ressort (3) raccordées aux portions de retenue (4) rectilignes.

3. Dispositif selon la revendication 1,
**caractérisé en ce que** la région de maintien (5) est constituée de portions de spire angulaires essentiellement rectilignes raccordées aux portions de retenue (4) rectilignes, l'élément de ressort (3) ayant une section triangulaire.

4. Dispositif selon une des revendications 1 à 3,
**caractérisé en ce que** les transitions (6) des spires vers la portion de retenue (4) rectiligne sont arrondies.

5. Dispositif selon la revendication 3,
**caractérisé en ce que** les transitions (7) des portions de spire angulaires entre elles sont arrondies.

6. Dispositif selon une des revendications 3 ou 5,
**caractérisé en ce que** la pointe de la forme triangulaire de l'élément de ressort (3) est aplatie, de façon qu'une section environ trapézoïdale de l'élément de ressort (3) soit obtenue.

7. Dispositif selon la revendication 6,
**caractérisé en ce que** la portion de paroi de l'élément de ressort (3) formant la partie aplatie a une courbure concave vers l'intérieur, en particulier d'une façon analogue à la forme ronde de la section de la partie en forme de tige ou du câble.

8. Dispositif selon une des revendications 1 à 7,
**caractérisé en ce que** la portion de retenue (4) rectiligne s'étend de façon conique d'un angle compris entre 0° et 70° par rapport à la partie en forme de tige traversée ou au câble traversé.

9. Dispositif selon une des revendications 1 à 7,
**caractérisé en ce que** la portion de retenue (4) rectiligne s'étend en parallèle à la partie en forme de tige traversée ou au câble traversé.

10. Dispositif selon une des revendications 3 à 9,
**caractérisé en ce que** l'élément de ressort (3) présente une section de triangle isocèle.

11. Dispositif selon une des revendications 1 à 10,
**caractérisé en ce que** les portions de ressort de l'élément de ressort (3) s'étendent jusqu'au voisinage de l'axe central (8) de l'élément de ressort (3) annulaire.

12. Dispositif selon une des revendications 1 à 11,
**caractérisé en ce que** les spires de l'élément de ressort (3) sont liées pour former un élément de ressort (3) annulaire sans fin.

13. Dispositif selon une des revendications 1 à 12,
**caractérisé en ce que** la portion de retenue (4) de l'élément de ressort (3) est attachée à la gaine de l'ouverture de passage (2).

14. Dispositif selon la revendication 13,
**caractérisé en ce que** la portion de retenue (4) de l'élément de ressort (3) est attachée avec fusion à la gaine de l'ouverture de passage (2), par exemple est collée, soudée ou brasée.

15. Dispositif selon la revendication 13 ou 14,
**caractérisé en ce que** la portion de retenue (4) est maintenue à la gaine de l'ouverture de passage (2) alternativement ou en outre d'une façon solidaire.

16. Dispositif selon la revendication 15,
**caractérisé en ce que** la gaine de l'ouverture de passage (2) comporte des nervures circonférentielles ou une rainure circonférentielle (9), les portions de retenue (4) de l'élément de ressort (3) étant montées axialement imperdables entre les nervures ou les flancs de la rainure (9).

17. Dispositif selon une des revendications 1 à 16,
**caractérisé en ce que** les portions de ressort (5) de l'élément de ressort (3) s'étendent radialement vers le canal de passage formé par l'ouverture de passage (2).

18. Dispositif selon une des revendications 1 à 16,
**caractérisé en ce que** les portions de ressort (5) de l'élément de ressort (3) sont inclinées dans le même sens d'un angle par rapport à la direction radiale par référence à l'ouverture de passage (2).

19. Dispositif selon une des revendications 1 à 18,
**caractérisé en ce que** l'élément de ressort (3) est constitué d'un fil rond.

20. Dispositif selon la revendication 19,
**caractérisé en ce que** l'élément de ressort (3) est constitué d'un fil rond en acier inoxydable.

21. Dispositif selon une des revendications 1 à 20,
**caractérisé en ce que** la partie (1) avec l'ouverture de passage (2) est une tige filetée d'une presse-étoupe recevant l'élément de ressort (3) et comportant à une extrémité un passe-câble (10) et un anneau d'étanchéité et/ou de serrage (11).

22. Dispositif selon une des revendications 1 à 21,
**caractérisé en ce que** les portions de ressort formant la région de maintien (5) présentent, vue en direction radiale de l'élément de ressort (3) annulaire, une longueur qui environ correspond au rayon de l'ouverture de passage (2).
